# EUROPÄISCHE PATENTSCHRIFT

(11) **EP 2 971 815 B1**
(45) Veröffentlichungstag und Bekanntmachung des Hinweises auf die Patenterteilung: **29.04.2020**
(21) Anmeldenummer: 14713375.5
(22) Anmeldetag: 12.02.2014
(51) Int. Cl.: F16C 17/02, F16C 33/08, F16C 35/02, F04D 13/06, F04D 13/02

(54) **GLEITLAGERBEFESTIGUNG IN EINEM KREISELPUMPENAGGREGAT**
FIXATION OF A PLAIN BEARING IN A ROTARY PUMP ASSEMBLY
FIXATION DE PALIER LISSE DANS UN ENSEMBLE POMPE CENTRIFUGE

(30) Priorität: 14.03.2013 DE 102013004340
(43) Veröffentlichungstag der Anmeldung: 20.01.2016
(73) Patentinhaber: WILO SE, 44263 Dortmund (DE)
(72) Erfinder: KÜSTER, Bernd, 44379 Dortmund (DE); EICHMANN, Andreas, 44149 Dortmund (DE)
(74) Vertreter: Cohausz Hannig Borkowski Wißgott
(86) Internationale Anmeldenummer: PCT/EP2014/000383
(87) Internationale Veröffentlichungsnummer: WO 2014/139623

(56) Entgegenhaltungen:
- EP-A1- 1 002 593
- US-A- 3 288 074

## Beschreibung

Die Erfindung betrifft ein Pumpenaggregat mit einer Pumpeneinheit und einem diese antreibenden Elektromotor umfassend einen Stator und einen Rotor mit einer Rotorwelle, die in wenigstens einem Gleitlager gelagert ist. Im Besonderen betrifft die Erfindung die Befestigung des Gleitlagers in einem Pumpenaggregat der genannten Art.

Ein Pumpenaggregat dieser Art ist in dem Patent US 3,288,074 beschrieben. Ein Verfahren zum Herstellen einer Nabe durch Stanzen für eine Welle mit einem Kreiskeilprofil ist aus der europäischen Patentanmeldung EP 1 002 593 A1 bekannt.

Kreiselpumpenaggregate werden in der Regel durch einen Elektromotor angetrieben. Dieser umfasst einen Stator und einen Rotor, wobei der Stator ein elektromagnetisches Feld erzeugt, welches mit einem vom Rotor gebildeten elektromagnetischen Feld interagiert, so dass auf den Rotor ein Drehmoment ausgeübt wird, durch welches der Rotor beschleunigt wird. Der Rotor wird im Wesentlichen durch die Rotorwelle und das auf der Rotorwelle drehfest angeordnete Rotorpaket gebildet, welches entweder in der Ausführung des Elektromotors als Asynchronmotor als Kurzschlussläufer ausgebildet ist oder im Falle eines Synchronmotors Permanentmagnete aufweist oder aus zumindest einem solchen gebildet ist. Für Anwendungen in Pumpen trägt das Ende der Rotorwelle meist ein in der Pumpeneinheit angeordnetes Pumpenlaufrad. Alternativ ist es auch möglich, dass das Ende der Rotorwelle über eine Kupplung mit einer weiteren Welle verbunden ist, die in die Pumpeneinheit hineinragt und ein solches Laufrad trägt.

Die Rotorwelle muss an wenigstens zwei sich axial gegenüberliegenden Stellen in dem Pumpenaggregat radial gelagert werden. Hierzu werden insbesondere bei Pumpenaggregaten in Nassläuferbauweise üblicherweise Gleitlager verwendet, wobei die zu pumpende Flüssigkeit gleichzeitig die Gleitlager schmiert. Aber auch bei Trockenläufern werden zunehmend Gleitlager eingesetzt, weil sie gegenüber Kugellagern einfacher und preiswerter hergestellt werden können, und heutzutage verfügbare tribologisch wirksame Kunststoffe und Kunststoffbeschichtungen eine hohe Standfestigkeit, geringe Reibung und einen geringen Abrieb gewährleisten.

Die Befestigung eines Gleitlagers in dem Pumpenaggregat kann auf unterschiedliche Arten, in der Regel durch Befestigung an einem übergeordneten, tragenden Bauteil. Bei Nassläuferpumpen mit Spalttopf ist es beispielsweise bekannt, am Boden des Spalttopfes eine formschlüssige Aufnahme für das Gleitlager vorzusehen, in der dieses eingesetzt wird. Eine solche Aufnahme muss jedoch präzise mit geringen Toleranzen gefertigt werden, um Spiel einerseits und eine mechanische Überbeanspruchung des Spalttopfes, welche zu Bruchstellen führen kann, infolge einer Presspassung zwischen Gleitlager und Aufnahme zu vermeiden. Bei spielbehafteter Aufnahme hintergreifen vom Boden in axialer Richtung abstehende Rastnasen das Gleitlager und sichern es auf diese Weise axial. Die Herstellung eines solchen Spalttopfes erfordert jedoch ein vergleichsweise komplexes Werkzeug, was wiederum zu erhöhten Herstellungskosten führt. Auch die Montage des Gleitlagers in einer solchen Ausnehmung erfordert Präzisionsarbeit.

Alternativ ist es bekannt, das Gleitlager bei der Herstellung des Spalttopfes aus Kunststoff in den Boden einzugießen. Dies erfordert jedoch eine exakte Positionierung des Lagers in der Kavität der Kunststoffspritzgussform sowie eine dortige Fixierung, damit die Position des Lagers in der Kavität durch den Druck der in die Kavität eingespritzten Formmasse nicht geändert wird.

Auf der der Pumpenkammer zugewandten Seite des Elektromotors ist es bei Nassläuferpumpen ferner bekannt, das Gleitlager mittels Presspassung in einem koaxialen Lagerträger anzuordnen. Dieser ist dann beispielsweise in das Ende des Spaltrohrs kraftschlüssig eingesteckt oder in der zentralen Ausnehmung eines flanschförmigen Lagerschildes eingesetzt, welches am Stator befestigt ist und in der Regel auch mit dem Spaltrohr mechanisch verbunden ist. Bei der Montage der einzelnen Bauteile sind diese dann koaxial zu fügen.

Die Herstellung dieser Bauteile muss mit Präzision, d.h. geringen Toleranzen erfolgen, um einerseits den Presssitz zu gewährleisten, andererseits eine Überpressung zu vermeiden, da anderenfalls durch das Einpressen des Gleitlagers in den Lagerträger, des Lagerträgers in das Spaltrohr, des Lagerträgers in den Lagerschild und/ oder der kraftschlüssigen Verbindung des Lagerschildes mit dem Spaltrohr eine lokale mechanische Überbeanspruchung des Lagerträgers, des Spaltrohrs und/ oder des Lagerschildes und eine Mikrorissbildung entstehen kann, welche wiederum zu Schäden am Pumpenaggregat, insbesondere zu einer Leckage führen kann. Darüber hinaus sind die Pressverbindungen aufgrund der verschiedenen Ausdehnungskoeffizienten der Materialien stets temperaturempfindlich, was insbesondere Heizungspumpen eine wichtige Rolle spielt. Schließlich bedingen die mechanischen Drehmomente Vibrationen im Elektromotor, so dass die Anpresskraft bei einer herkömmlichen Pressverbindung über die Betriebsdauer des Aggregats nicht konstant ist.

Aufgabe der Erfindung ist es, eine alternative Befestigung eines Gleitlagers in einem Pumpenaggregat bereit zu stellen, die eine dauerhaft sichere und genaue Positionierung des Gleitlagers und Fixierung desselben innerhalb des Pumpenaggregats bei gleichzeitig einfacher Montage gewährleistet.

Diese Aufgabe wird durch die Merkmale des Anspruchs 1 gelöst. Vorteilhafte Weiterbildungen sind in den Unteransprüchen angegeben.

Erfindungsgemäß wird ein Pumpenaggregat mit einer Pumpeneinheit und einem diese antreibenden Elektromotor umfassend einen Stator und einen Rotor mit einer Rotorwelle, die in wenigstens einem Gleitlager gelagert ist, vorgeschlagen, wobei die Befestigung des Gleitlagers in dem Pumpenaggregat mittels wenigstens einer Kreiskeilverbindung umfassend wenigstens einen Kreiskeil und wenigstens einen komplementären Kreiskeil erfolgt.

Die Verwendung einer Kreiskeilverbindung ermöglicht den Ausgleich von Toleranzen, so dass das Gleitlager und sein Verbindungspartner bzw. ein das Gleitlager haltendes Bauteil und dessen Verbindungspartner mit höheren Toleranzen gefertigt werden können. Deren Herstellungskosten reduzieren sich damit erheblich. Des Weiteren gewährleistet die Kreiskeilverbindung eine über die Betriebsdauer konstante Pressverbindung, da sie beim Verdrehen in Klemmrichtung selbsthemmend ist. Schließlich ermöglicht die Kreiskeilverbindung eine einfache Montage des Gleitlagers bzw. des das Gleitlager haltenden Bauteils und gewährleistet für Wartungszwecke bei entsprechender Ausführung auch eine einfache Lösbarkeit zum Zwecke der Demontage des Gleitlagers.

Darüber hinaus hat eine Kreiskeilverbindung gegenüber herkömmlichen Pressverbindungen den Vorteil, dass sich die Verbindungpartner großflächig berühren, was bei einer reinen Presspassung aufgrund entstehender Verformung zu unrunden Verbindungen nicht der Fall ist. Ferner wird mittels einer Kreiskeilverbindung eine gleichmäßige Flächenpressung entlang der Umfangsfläche der Verbindung erreicht, die zudem gezielt je nach auf die Kreiskeilverbindung ausgeübtem Drehmoment eingestellt werden kann.

Erfindungsgemäß kann die Kreiskeilverbindung zur Befestigung des Gleitlagers zwischen verschiedenen Bauteilen bestehen. Auch ist es möglich, mehrere Kreiskeilverbindungen zwischen diesen verschiedenen Bauteilen vorzusehen. Dies wird nachfolgend erläutert.

Beispielsweise kann die Kreiskeilverbindung zwischen dem Gleitlager und einem das Gleitlager aufnehmenden Lagerträger gebildet sein. Das Gleitlager bildet dabei eine Art zylindrisches, hülsenförmiges Bauteil, durch das die Rotorwelle koaxial hindurchgeführt ist. In Bezug auf die Kreiskeilverbindung bildet das Gleitlager ein Innenteil, dessen radialer Querschnitt zumindest im Bereich der Kreiskeilverbindung annähernd kreisförmig ist, wobei auf der äußeren Umfangsfläche wenigstens ein Kreiskeil angeordnet ist. Im Radial-Querschnitt betrachtet, bildet der Außenumfang des Gleitlagers einen Grundkreis, auf dem sich das Keilprofil erhebt.

Der Lagerträger bildet als Verbindungspartner demgegenüber ein Außenteil der Kreiskeilverbindung mit einer zylindrischen Öffnung, in die das Gleitlager aufgenommen ist. Auf der zur Öffnung gerichteten Innenseite befindet sich wenigstens ein zum wenigstens einen Kreiskeil des Gleitlagers komplementärer Kreisteil. Im radialen Querschnitt betrachtet, bildet der Innenumfang des Lagerträgers einen Grundkreis, auf dem sich das komplementäre Keilprofil erhebt.

Jeder Kreiskeil, d.h. der Kreiskeil des Gleitlagers und der Kreiskeil des Lagerträgers, besteht aus einem stetig steigenden Profil über dem abgewickelten Grundkreis, das bis zu einer bestimmten Profilhöhe ansteigt und danach in einer gegenüber dem Anstieg steilen Flanke abfällt, die als Keilrücken bezeichnet wird.

Gleitlager und Lagerträger werden mit Spiel gefügt, wobei durch Verdrehen der beiden Teile gegeneinander das Spiel beseitigt wird. Das Gleitlager wird dabei gegen den Lagerträger verspannt, wobei die Keilprofile der Kreiskeile gegeneinander gepresst werden.

Gemäß einer alternativen Ausführungsvariante kann das zuvor als Lagerträger bezeichnete Bauteil die Rotorwelle direkt lagern. Dies bedeutet, dass es eine zylindrische Öffnung aufweist, durch die sich die Rotorwelle drehbar koaxial hindurcherstreckt. Die Innenseite dieser Öffnung bildet dann eine Gleitfläche, so dass der Lagerträger selbst als Gleitlager fungiert. Das eigentliche Lager, das besagte Gleitfläche und zumindest einen Teil der Innenwand der Öffnung umfasst, bildet dann mit dem Lagerträger ein einziges Bauteil.

Die Gleitlagerfläche kann eine Beschichtung beispielsweise aus Keramik, einer DLC Schicht oder aus einem tribologisch optimierten Kunststoff sein. Es kann sich jedoch auch um eine dickere Schicht aus einem solchen Material handeln, die dann zumindest einen Teil der Innenwand mitbildet. Wird ein tribologisch optimierter Kunststoff verwendet, kann dieser beispielsweise durch Zweikomponentenspritzgießen auf den Lagerträger aufgespritzt sein.

Die Schicht oder Beschichtung erzeugt einen stofflichen Verbund zwischen Gleitlager und Lagerträger, so dass diese untrennbar miteinander verbunden sind. Auch ist es möglich, dass das der Lagerträger mitsamt dem Gleitlager aus einem einzigen Kunststoffmaterial in einem Herstellungsschritt hergestellt wird, beispielsweise aus einem tribologisch optimierten Kunststoff. Auf diese Weise bildet der Lagerträger selbst das Gleitlager.

Bei einer derartigen Ausführungsvariante kann die Kreiskeilverbindung zwischen diesem Gleitlager und einem am Elektromotor oder an der Pumpeneinheit befestigten Halteelement vorhanden sein. Das Halteelement kann direkt am Elektromotor, insbesondere am Stator oder Motorgehäuse befestigt und/ oder einstückig mit anderen Bauteilen ausgebildet sein, wie nachfolgend noch verdeutlicht wird.

Alternativ zu der erstgenannten Ausführungsvariante, bei der die Kreiskeilverbindung zwischen dem Gleitlager und einem Lagerträger besteht, und alternativ zu der zweitgenannten Ausführungsvariante, bei der der Lagerträger gleichzeitig das Gleitlager bildet und dieses so gebildete Gleitlager mittels einer Kreiskeilverbindung mit dem Haltelement verbunden ist, ist es auch möglich, dass zwischen einem das Gleitlager aufnehmenden Lagerträger und dem Halteelement eine Kreiskeilverbindung besteht. In dieser Ausführungsvariante sind Gleitlager und Lagerträger nicht einstückig sondern zwei unabhängige Bauteile. Diese können auf herkömmliche Art mittels Formschluss oder Presspassung miteinander gefügt sein, so dass die erfindungsgemäße Kreiskeilverbindung dann nur zwischen dem Gleitlager und dem Halteelement vorhanden ist.

Diese Variante kann jedoch auch gemeinsam mit der erstgenannten verwendet werden, so dass eine erste Kreiskeilverbindung zwischen dem Gleitlager und dem Lagerträger und eine weitere Kreiskeilverbindung zwischen diesem Lagerträger und dem Halteelement ausgebildet ist. Dies ermöglicht, dass Gleitlager und Lagerträger in einem Zuge, d.h. durch eine einzige drehmomenterzeugende Bewegung in dem Pumpenaggregat montiert werden können.

Bei der Kreiskeilverbindung zwischen Lagerträger und Halteelement bzw. Lager und Halteelement bildet das Gleitlager bzw. der Lagerträger ein Innenteil, dessen radialer Querschnitt zumindest im Bereich der Kreiskeilverbindung annähernd kreisförmig ist, wobei auf der äußeren Umfangsfläche wenigstens ein Kreiskeil angeordnet ist. Im Radial-Querschnitt betrachtet, bildet der Außenumfang des Gleitlagers bzw. des Lagerträgers einen Grundkreis, auf dem sich das Keilprofil erhebt. In entsprechender Weise bildet das Halteelement als Verbindungspartner demgegenüber ein Außenteil der Kreiskeilverbindung mit einer zylindrischen Öffnung, in die das Gleitlager bzw. der Lagerträger aufgenommen ist. Auf der zur Öffnung gerichteten Innenseite befindet sich wenigstens ein zum wenigstens einen Kreiskeil des Gleitlagers/ Lagerträgers komplementärer Kreisteil. Im radialen Querschnitt betrachtet, bildet der Innenumfang des Halteelements einen Grundkreis, auf dem sich das komplementäre Keilprofil erhebt.

Das Halteelement kann gemäß einer Ausführungsvariante in einem Spaltrohr befestigt sein, das den Stator vom Rotor trennt, welcher in einem Rotorraum dreht. Das Spaltrohr begrenzt damit den Rotorraum und trennt den Stator vom Rotor flüssigkeitsdicht, wie dies üblicherweise bei Nassläuferpumpen der Fall ist. Zur Montage des Halteelements im Spaltrohr weist das Halteelement vorzugsweise einen rohrabschnittförmigen Teil auf, der von einem Endabschnitt des Spaltrohrs im montierten Zustand umfänglich umgriffen wird, so dass das Halteelement in das axiale Ende des Spaltrohrs koaxial eingesetzt ist. Dies kann sowohl an dem zur Pumpeneinheit gerichteten Ende des Spaltrohres als auch an der dieser Pumpeneinheit abgewandten Seite erfolgen. Insbesondere kann das Spaltrohr am abgewandten Ende geschlossen sein und damit einen Spalttopf bilden.

Alternativ kann das Halteelement einen Endabschnitt des Spaltrohres bilden. Gemäß der genannten Ausführung ist das Halteelement Teil des Spaltrohres, d.h. mit diesem einstückig. Dies bedeutet letztendlich, dass die Kreiskeilverbindung zwischen dem Gleitlager oder dem Lagerträger und dem Halteelement oder die weitere Kreiskeilverbindung zwischen dem Lagerträger und dem Halteelement genau genommen zwischen Gleitlager bzw. Lagerträger und dem Spaltrohr besteht. Denn der äußere Verbindungspartner dieser Keilkreisverbindung ist dann das Spaltrohr, in dessen Öffnung das Gleitlager oder der Lagerträger mitsamt dem Gleitlager aufgenommen ist/ sind. Der zum wenigstens einen Kreiskeil des Gleitlagers bzw. des Lagerträgers komplementäre Kreisteil befindet sich dann auf der zur Öffnung gerichteten Innenseite des Spaltrohrs. Im radialen Querschnitt betrachtet, bildet der Innenumfang des Endabschnitts des Spaltrohrs den Grundkreis, auf dem sich das komplementäre Keilprofil erhebt.

Bei der Ausführungsvariante, bei der das Halteelement ein vom Spaltrohr separates Teil ist und in den Endabschnitt des Spaltrohrs eingesetzt ist, kann gemäß einer bevorzugten Weiterbildung die Kreiskeilverbindung oder eine weitere Keilkreisverbindung zwischen dem Halteelement und dem Spaltrohr ausgebildet sein, so dass das Halteelement im Spaltrohr über diese Keilkreisverbindung befestigt ist. Dabei stellt das Halteelement den inneren Verbindungspartner dar, an dessen Außenumfangsfläche sich das eine Kreiskeilprofil erhebt, und das Spaltrohr insbesondere ein Endabschnitt desselben den äußeren Verbindungspartner dar, an dessen Innenumfangsfläche sich das komplementäre Kreiskeilprofil erhebt.

Zusammengefasst kann gemäß der beschriebenen Ausführungsvarianten zur Befestigung des Gleitlagers in dem Pumpenaggregat folglich eine Kreiskeilverbindung zwischen
- Gleitlager und Lagerträger, und/ oder
- zwischen Gleitlager oder Lagerträger und Halteelement oder
- zwischen Gleitlager oder Lagerträger und Spaltrohr, und/ oder
- zwischen Halteelement und Spaltrohr
ausgebildet sein. Diese Kreiskeilverbindungen zwischen den genannten Bauteilen können einzeln oder beliebig in Kombination verwendet werden. So liegt mindestens eine Kreiskeilverbindung vor und können maximal drei Kreiskeilverbindungen vorliegen. Nachfolgend wird unter der Bezeichnung "weitere Kreiskeilverbindung" jede zweite und/ oder eine dritte Kreiskeilverbindung verstanden, die zusätzlich zu der einen mindestens vorhandenen Kreiskeilverbindung existiert.

Damit ist wenigstens ein Kreiskeil sich in eine erste Umfangsrichtung erhebend auf der Außenumfangsfläche des Gleitlagers, des Lagerträgers und/ oder des Halteelements ausgebildet, und, radial gegenüberliegend, wenigstens ein komplementärer Kreiskeil sich in die entsprechend entgegengesetzte Umfangsrichtung erhebend auf der Innenumfangsfläche des Lagerträgers, des Halteelements oder des Spaltrohres ausgebildet.

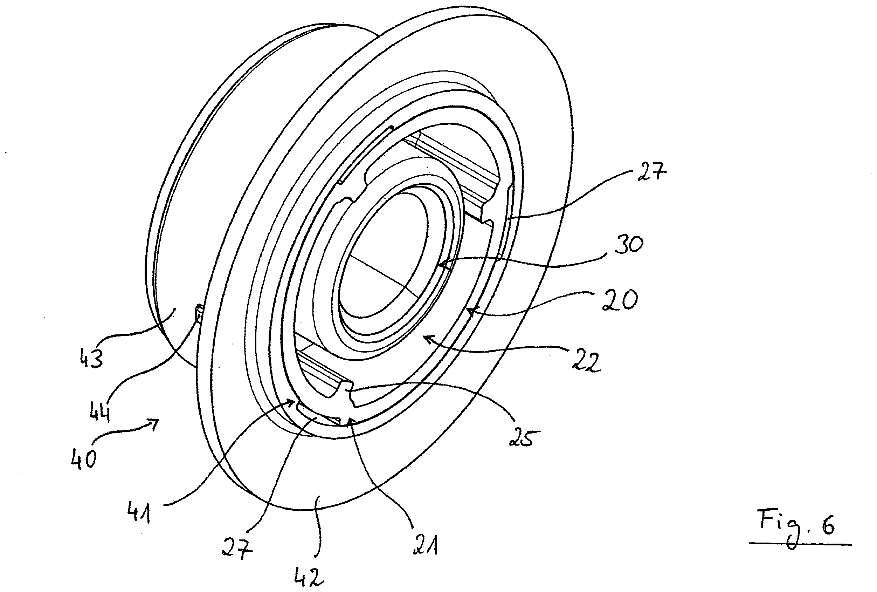

Damit ergibt sich, dass ein Verbindungspartner gegenüber dem anderen Verbindungspartner verspannt werden kann, indem er bei feststehendem anderen Verbindungspartner in diejenige Richtung gedreht wird, in der sein an der Kreiskeilverbindung partizipierendes Keilprofil abnimmt. Aus diesem Verständnis ergibt sich beispielsweise, dass eine Klemmwirkung der Kreiskeilverbindung zwischen Gleitlager und Lagerträger dann vorliegt, wenn das Gleitlager relativ zum Lagerträger in die erste Umfangsrichtung A und der Lagerträger relativ zum Gleitlager in die entgegengesetzte Umfangsrichtung B gedreht wird, vgl. Figur 6.

Die Begriffe "erste Umfangsrichtung" und "entgegengesetzte Umfangsrichtung" beziehen sich hier lediglich auf zwei zueinander gehörige Verbindungspartner, d.h. beispielsweise Gleitlager und Lagerträger oder Lagerträger und Spaltrohr. Dies bedeutet, dass die erste Umfangsrichtung bei dem Verbund aus Gleitlager und Lagerträger nicht identisch zu der ersten Umfangsrichtung bei dem Verbund aus Lagerträger und Gleitlager sein muss. Selbiges gilt für die entgegengesetzte Umfangsrichtung. Vielmehr sind bei der Verwendung von zwei oder drei Kreiskeilverbindungen die Umfangsrichtungen auf den Außenseiten zweier Verbindungspartner, z.B. Außenseite Gleitlager im Vergleich zur Außenseite Lagerträger, vorzugsweise zu vertauschen, um durch eine Verdrehung der Bauteile in dieselbe Richtung, beide oder alle Kreiskeilverbindungen gleichzeitig zu verspannen. Dies wird beispielsweise dann erreicht, wenn sich bei demjenigen Bauteil, das sich unmittelbar zwischen zwei Kreiskeilverbindungen befindet, wie dies beim Lagerträger oder beim Halteelement der Fall sein kann, der außenumfänglich und innenumfänglich angeordnete Kreiskeil in dieselbe Umfangsrichtung erheben.

Grundsätzlich kann die Kreiskeilverbindung und/ oder die weitere Kreiskeilverbindung durch einen, zwei oder mehr Kreiskeile und entsprechend einen, zwei oder mehr komplementäre Kreiskeile gebildet sein. Es ist jedoch von Vorteil, eine Kreiskeilverbindung durch drei Kreiskeile auf der Außenumfangsfläche des jeweils inneren Verbindungspartners (Gleitlager, Lagerträger, Halteelement) und drei komplementäre Kreiskeile auf der Innenumfangsfläche des jeweils äußeren Verbindungspartners (Lagerträger, Halteelement, Spaltrohr) auszubilden. Damit wird erreicht, dass die Kreiskeilverbindung selbstzentrierend ist.

In einer vorteilhaften Ausgestaltung der Erfindung liegt die Steigung der Kreiskeile der Kreiskeilverbindung oder der weiteren Kreiskeilverbindung zwischen 1:20 bis 1: 200. Im unteren Bereich des genannten Steigungsverhältnisbereichs, d.h. zwischen 1: 20 bis etwa 1:100 besteht die Möglichkeit, die Kreiskeilverbindung zu Demontagezwecken zu lösen, wobei im oberen Bereich, d.h. bei Steigungsverhältnissen von 1:100 bis 1:200 unlösbare Verbindungen realisiert werden können.

Vorzugsweise ist die Kontur der Kreiskeile als logarithmische Spirale ausgeführt. Dies hat den Vorteil, dass sich die Verbindungspartner der Kreiskeilverbindung nicht linear sondern flächig berühren.

Gemäß einer besonders bevorzugten Ausführungsvariante ist das Kreiselpumpenaggregat mit einem Elektromotor versehen, der einen nasslaufenden Rotor aufweist. Dies bedeutet, dass der Rotorraum mit einer Flüssigkeit geflutet ist und der Rotor, d.h. insbesondere das Rotorpaket, von einer Flüssigkeit umgeben und im Betrieb entsprechend flüssigkeitsumströmt ist. Ein derartiges Pumpenaggregat wird als Nassläuferpumpe bezeichnet.

Eine ganz besondere vorteilhafte Eigenschaft, die sich aus der Verwendung der Kreiskeilverbindung bei einem Kreiselpumpenaggregat mit einem nasslaufenden Elektromotor ergibt, besteht darin, dass sich im verspannten Zustand der Kreiskeilverbindung zwischen einem Kreiskeil und einem in Umfangsrichtung benachbarten komplementären Kreiskeil, insbesondere zwischen deren Keilrücken (steile Flanke am Profilende eines Kreiskeils), eine Öffnung bildet, die von der Flüssigkeit im nasslaufenden Elektromotor durchströmt werden kann. Insbesondere kann dadurch ein Flüssigkeitsaustausch zwischen Rotorraum und dem vor dem Rotorraum liegenden Bereich des Pumpenaggregats, insbesondere mit dem Pumpenraum, beispielsweise zu Zwecke der Kühlung geschaffen werden. Gemäß dieser Erkenntnis des synergetischen Effekts der Verwendung einer Kreiskeilverbindung zur Befestigung eines Gleitlagers in einer Nassläuferpumpen ist bevorzugt vorgesehen, dass diese Öffnung unverschlossen bleibt.

Bilden zwei oder mehr Kreiskeile jeweils am Umfang eines Verbindungspartners eine Kreiskeilverbindung, ist entsprechend zwischen einem jeden Kreiskeil und in Umfangsrichtung benachbarten komplementären Kreiskeil im verspannten Zustand der Kreiskeilverbindung eine Öffnung gebildet, von denen mindestens eine im Betrieb des Pumpenaggregats zur Durchströmung unverschlossen ist. Gemäß dieser Ausführungsvariante bleibt also wenigstens eine dieser axialen Öffnungen nach der Befestigung des Gleitlagers im Lagerträger oder des Gleitlagers oder Lagerträgers im Halteelement oder im Spaltrohr frei, so dass sie im Betrieb als axialer Durchströmkanal verwendet werden kann, durch den die im Rotorraum befindliche Flüssigkeit strömen kann.

Die Öffnungen verlaufen in derselben Richtung wie die Keilrücken, insbesondere achsparallel zur Rotorwelle. Dies gewährleistet bereits einen guten Flüssigkeitsaustausch im Rotorraum, wodurch zum einen die Festsetzung von Partikeln verhindert wird und zum anderen ein Wärmeabtransport bewirkt wird.

Die genannte Flüssigkeit kann beispielsweise die von der Pumpe geförderte Flüssigkeit sein, beispielsweise in Anwendungen des Kreiselpumpenaggregats als Heizungspumpe Wasser oder Glykol, wobei der Rotorraum dann mit dem Pumpenraum kommunizierend verbunden ist. Alternativ kann der Rotorraum zur Pumpenkammer geschlossen sein, so dass die Flüssigkeit im Rotorraum von der geförderten Flüssigkeit verschieden ist. Dies ist beispielsweise durch eine Vorkammer vor dem Rotorraum möglich, die durch eine Trennwand vom Pumpenraum getrennt ist.

Vorzugsweise liegt in der Öffnung oder wenigstens einer der Öffnungen ein Sperrmittel ein. Ein solches Sperrmittel kann ein Lösen der Kreiskeilverbindung verhindern, da die Verbindungspartner bei Einliegen eines Sperrmittels in der Öffnung oder einer der Öffnungen nicht mehr zurückgedreht werden können.

Das Sperrmittel kann massiv oder hohl sein, vorzugsweise mit zumindest in Durchgangsrichtung gegenüberliegenden Öffnungen ausgebildet sein, so dass die Durchströmbarkeit der Öffnung der Kreiskeilverbindung, in die das Sperrmittel eingesetzt ist, erhalten bleibt. Das Sperrmittel ist dann selbst von der Flüssigkeit durchströmbar.

Es ist zu berücksichtigen, dass bei einer Kreiskeilverbindung mit lediglich einem einzigen Kreiskeil und einem komplementären Kreiskeil nur eine einzige Öffnung vorhanden ist. In diesem Fall ist es sinnvoll, wenn das Sperrmittel von der Flüssigkeit durchströmbar ist. Demgegenüber sind bei einer Kreiskeilverbindung mit mehreren Kreiskeilen und mehreren komplementären Kreiskeilen mehrere Öffnungen vorhanden. En Sperrmittel kann hier in einer, in zwei, in mehreren oder sogar in allen Öffnungen einliegen. Es sollte jedoch zumindest eine Öffnung unverschlossen bleiben, d.h. entweder kein oder zumindest ein durchströmbares Sperrmittel in dieser zumindest einen Öffnung einliegen. In den anderen oder wenigstens einer anderen Öffnung kann dann ein massives Sperrmittel einliegen.

Es sei angemerkt, dass, auch wenn hier das Sperrmittel nur in Bezug zu einer einzigen Kreiskeilverbindung erläutert ist, dieses Sperrmittel bei jeder der Kreiskeilverbindungen zwischen den einzelnen Verbindungspartnern alternativ oder kumulativ verwendet werden kann, insbesondere auch bei der weiteren Kreiskeilverbindung.

Besonders vorteilhaft ist es ferner, wenn in der Öffnung oder wenigstens einer der Öffnungen ein Filterelement einliegt. Ein solches Filterelement ist in der Lage, aus der im Rotorraum befindlichen Flüssigkeit schwebende Feststoffpartikel wie Kalkausfällung oder Rostpartikel herauszufiltern. Dies verhindert, dass sich diese Partikel an unerwünschten Stellen, beispielsweise im Rotorspalt oder im Bereich des Lagerspaltes an dem Gleitlager festsetzen und dort zu erhöhtem Verschleiß oder anderen Schäden führen.

Das Filterelement kann beispielsweise schwammartig sein, insbesondere aus einem porösen Material bestehen. Alternativ kann es eine netzartige Struktur aufweisen. In den genannten Fällen kann das Filterelement aus Kunststoff, insbesondere einem elastomeren, thermoplastischen oder duroplastischen Kunststoff, einem Kunststoffgemisch oder auch aus einem Metall oder einer metallischen Zusammensetzung bestehen. Weiter alternativ kann das Filterelement als ein metallisches Drahtgeflecht ausgebildet sein, das insbesondere gepresst ist. Auch ein gesintertes Metall kann hier als Filterelement verwendet werden. Diese Varianten haben jeweils den Vorteil, dass das Filterelement mechanische Kräfte aufnehmen kann. Dies ist allerdings je nach Struktur des Filterelements auch bei der Verwendung eines Thermoplasten oder Duroplasten der Fall. Jedoch ist die Fähigkeit, mechanische Kräfte aufzunehmen bei einer metallischen Struktur naturgemäß höher.

Gemäß einer bevorzugten Ausführungsvariante bildet das Filterelement gleichzeitig ein vorgenanntes Sperrmittel. Dies ist insbesondere bei einem formstabilen Filterelement möglich, das mechanische Kräfte aufnehmen kann. Insoweit gilt hier für das Filterelement das zum Sperrmittel Gesagte.

Allerdings ist es zur effektiven Filterung der in den Rotorraum eintretenden Flüssigkeit sinnvoll, in jede bei einer Kreiskeilverbindung vorhandene Öffnung ein Filterelement einzusetzen. Eine Öffnung von einem Filterelement frei zu halten, würde demgegenüber die Gefahr bedeutet, dass durch diese Öffnung Feststoffpartikel in den Rotorraum gelangen. Demgegenüber genügt ist, eine einzige Öffnung mit einem mechanisch stabilen Filterelement auszustatten, um eine Sperrwirkung und ein lockern der Kreiskeilverbindung zu verhindern.

Ein Filterelement, das gleichzeitig Sperrmittel ist, kann beispielsweise durch ein gepresstes Drahtgeflecht oder ein gesintertes Metall realisiert werden. Alternativ kann auch eine formstabile rohrförmige Stützstruktur (Röhrchen) verwendet werden, die in die Öffnung eingeschoben ist und die in ihrem Inneren ein oder mehrere schwammartige, poröse Filterelemente enthält. Das Röhrchen bildet damit das Sperrmittel, sein Inneres den Filter.

Das Filterelement kann sich entlang der gesamten axialen Länge einer Öffnung der Kreiskeilverbindung erstrecken oder nur einen Teil dieser axialen Länge ausfüllen. Auch ist es möglich, dass zwei oder mehr derartige Filterelemente hintereinander in einer Öffnung einliegen.

Es sei auch hier angemerkt, dass, auch wenn das Filterelement beispielhaft nur in Bezug zu einer einzigen Kreiskeilverbindung erläutert ist, dieses Sperrmittel bei jeder der Kreiskeilverbindungen zwischen den einzelnen Verbindungspartnern alternativ oder kumulativ verwendet werden kann, insbesondere auch bei der weiteren Kreiskeilverbindung.

Die Kreiskeilverbindung oder weitere Kreiskeilverbindung kann eine umfängliche Kontaktfläche mit einem Gesamtumfangswinkel zwischen 180° und 330° aufweisen. Als umfängliche Kontaktfläche wird hier die Summe aller Winkelabschnitte α₂ der Kreiskeilverbindung verstanden, bei denen der Kreiskeil oder die Kreiskeile des einen Verbindungspartners mit seinem/ihren Kreisprofil(en) an dem Kreisprofil des komplementären Kreiskeils oder den Kreisprofilen der komplementären Kreiskeile des anderen Verbindungspartners anliegt/liegen. Je größer die umfängliche Kontaktfläche ist, desto größer ist das maximale Drehmoment, das vom einen Verbindungspartner zum anderen Verbindungspartner übertragen werden kann.

Da die die umfängliche Kontaktfläche definierenden Winkelabschnitte α₁ mit den die Öffnungen bzw. Durchströmöffnungen zwischen den Keilrücken definierenden Winkelabschnitte α₂ einen Vollkreis bilden, sollte die umfängliche Kontaktfläche nicht zu groß gewählt werden, weil anderenfalls die Breite der Durchströmöffnungen zu gering ist. Beispielsweise entfallen bei einer Kreiskeilverbindung mit drei Kreiskeilen und einer umfänglichen Kontaktfläche von 300° je α₂ = 20° Winkelabschnitt auf eine Durchströmöffnung. Damit die Durchströmöffnungen eine noch ausreichende Durchströmkapazität besitzen, sollten diese einen Umfangswinkel von mindestens α₂ = 10° besitzen, so dass für diesen Fall die maximale umfänglich Kontaktfläche ca. 330° beträgt.

Erfindungsgemäß kann das Gleitlager oder der Lagerträger eine die Kreiskeilform tragende Außenwand und eine die Rotorwelle lagernde Innenwand aufweisen, wobei die Außenwand und die Innenwand beabstandet zueinander liegen und über eine Stützstruktur miteinander verbunden sind. Hierdurch wird ein Ringraum erzeugt und eine Doppelwandigkeit erreicht, die mehrere Wirkungen besitzt. Zum einen kann gegenüber einer massiven Ausbildung des Gleitlagers bzw. des Lagerträgers Material eingespart werden, was insbesondere bei vergleichsweise teuren Materialien, wie tribologisch optimierten Kunststoffen, zu einer erheblichen Kosteneinsparung führt. Gleichzeitig wird eine Gewichtseinsparung erreicht. Darüber hinaus wird durch die Beabstandung der Wände eine großflächige Eingriffsmöglichkeit für ein drehmomenterzeugendes Werkzeug bereitgestellt.

Ein weiterer Vorteil der Doppelwandigkeit gegenüber einem massiven Bauteil besteht in der gleichmäßigen Kräfteverteilung (Materialbeanspruchung). So können sich eingeleitete Kräfte umfänglich homogen verteilen, insbesondere unabhängig voneinander. D.h., dass Kräfte, die durch die Kreiskeilverbindung zwischen Gleitlager und Lagerträger in die Innenwand eingeleitet werden oder - im Falle der Einstückigkeit von Gleitlager und Lagerträger- von der Rotorwelle in das Gleitlager eingeleitet werden, können sich in der Innenwand homogen verteilen. Und Kräfte, die durch die Kreiskeilverbindung zwischen Lagerträger und Halteelement oder Spaltrohr in die Außenwand eingeleitet werden, können sich in der Innenwand homogen verteilen.

Ein weiterer Vorteil der Doppelwandigkeit besteht in der dadurch entstehenden mechanischen Elastizität. So können beispielsweise Vibrationen von der Welle von der Innenwand aufgenommen und gedämpft werden.

Die genannte Stützstruktur zwischen der Außenwand und der Innenwand kann durch eine ringförmige Wand oder durch wenigstens drei Verbindungsstege gebildet sein. Die ringförmige Wand begrenzt den Rotorraum in Richtung der Pumpeneinheit. Demgegenüber ist eine durch Verbindungsstege gebildete Stützstruktur in axialer Richtung, d.h. zwischen den Stegen, zumindest zum Teil offen, so dass der Rotorraum zum Bereich vor dem Gleitlager hin, insbesondere zur Pumpenkammer hin offen ist. Um hier eine Filterung zu erreichen, kann beispielsweise in dem Gleitlager oder Lagerträger zwischen die Innenwand und die Außenwand ein ringförmiger Filter eingesetzt werden. Er kann von der baulichen Struktur und materiellen Beschaffenheit so ausgebildet sein wie, wie dies in Bezug auf die für die Durchströmöffnungen vorgesehenen Filterelemente erläutert wurde.

Vorzugsweise ist die Stützstruktur an einem axialen Ende der Außenwand und der Innenwand oder im Bereich zwischen der axialen Mitte und dem besagten Ende angeordnet. Der Ringraum wird dann durch die Stützstruktur begrenzt und verleiht ihr eine bestimmte Tiefe, so dass ein drehmomenterzeugendes Werkzeug zur Montage des Gleitlagers und/ oder des Lagerträger in den Ringraum formschlüssig eingreifen kann. Die Stützstruktur bildet damit für das Werkzeug einen Anschlag in axialer Richtung, so dass das Gleitlager und/ oder das Lagerträger auf dem Werkzeug in axialer Richtung bei der Montage in Position gehalten werden kann.

In einer vorteilhaften Weiterbildung besitzt die Außenwand und/ oder die Innenwand wenigstens einen radialen Vorsprung zur formschlüssigen Aufnahme des drehmomenterzeugenden Werkzeugs. Vorzugsweise sind zwei, drei oder mehr solcher Vorsprünge vorhanden, insbesondere symmetrisch verteilt angeordnet. Das Werkzeug besitzt eine korrespondierende radiale Nut, in die der Vorsprung formschlüssig eingreifen kann. Bei Ausübung einer Drehbewegung des Werkzeugs wird dann auf den Vorsprung oder die Vorsprünge ein Drehmoment erzeugt und in das Gleitlager oder den Lagerträger eingeleitet. Bei symmetrischer Verteilung der Vorsprünge, erfolgt die Momenteinleitung ebenfalls symmetrisch.

Es ist des Weiteren von Vorteil, wenn der Vorsprung oder die Vorsprünge dort angeordnet ist/ sind, wo die Wanddicke der Außenwand oder der Innenwand in Folge der Kreiskeilform am dünnsten ist. Dies ist unmittelbar zu Beginn eines Keilkreisprofils der Fall, d.h. unmittelbar nach einem Keilrücken. Alternativ kann die Anordnung des Vorsprungs bzw. der Vorsprünge in der Mitte des Kreiskeils bzw. der Kreiskeile in Umfangsrichtung betrachtet erfolgen. Die Anzahl der Vorsprünge entspricht in beiden Fällen dann vorzugsweise der Anzahl an Kreiskeilen.

Das Gleitlager, der Lagerträger und/ oder das Haltelement kann an dem der Pumpeneinheit zugewandten axialen Ende des Spaltrohres in dem Spaltrohr angeordnet sein. Es kann jedoch auch an dem der Pumpeneinheit abgewandten axialen Ende in dem Spaltrohr einliegen.

Des Weiteren kann das Spaltrohr ein Spalttopf mit einem ein axiales Ende verschließenden Boden sein, wobei der Endabschnitt durch dieses geschlossene Ende des Spalttopfes gebildet ist, und in dem Endabschnitt eine kreiskeilförmige Aufnahme vorgesehen ist, in der das Gleitlager oder der Lagerträger einliegt. In dieser Ausführung bildet der bodenseitige Endabschnitt das Halteelement.

Bei der herkömmlichen Bauweise von Pumpenaggregaten ist die Rotorwelle von zwei Gleitlagern gelagert. Insbesondere kann bei jedem dieser Gleitlager erfindungsgemäß eine Befestigung mittels einer Kreiskeilverbindung erfolgen. In Bezug zu einer Nassläuferpumpe, bei der ein erstes Gleitlager an einem Ende des Spaltrohrs befestigt und das andere Gleitlager am anderen Ende des Spaltrohrs befestigt ist, kann jedes dieser Gleitlager mittels einer Kreiskeilverbindung in dem Spaltrohr befestigt sein, entweder direkt oder indirekt über die weiteren beschriebenen Bauteile Lagerträger und/ oder Halteelement.

Weitere Vorteile und Eigenschaften des erfindungsgemäßen Pumpenaggregats sowie der erfindungsgemäßen Kreiskeilverbindung werden nachfolgend anhand von zwei Ausführungsbeispielen und den beigefügten Figuren näher erläutert. Es zeigen:
- Figur 1:: Explosionsdarstellung einer ersten Ausführungsvariante von Gleitlager und Lagerträger zwischen denen eine Kreiskeilverbindung herstellbar ist.
- Figur 2:: Radialer Querschnitt der ersten Ausführungsvariante durch Lagerträger mit montiertem Gleitlager.
- Figur 3:: Explosionsdarstellung einer zweiten Ausführungsvariante von Lagerträger und Halteelement zwischen denen eine Kreiskeilverbindung herstellbar ist.
- Figur 4:: Axialer Querschnitt der zweiten Ausführungsvariante durch Halteelement mit montiertem Lagerträger
- Figur 5:: Draufsicht der zweiten Ausführungsvariante auf Halteelement mit montiertem Lagerträger
- Figur 6:: Perspektivische Ansicht der zweiten Ausführungsvariante auf Halteelement mit montiertem Lagerträger
- Figur 7:: Perspektivische Ansicht einer dritten Ausführungsvariante mit Kreiskeilverbindung zwischen Lagerträger und Spaltrohr

Die nachfolgend beschriebenen Ausführungsbeispiele betreffen ein Pumpenaggregat mit einer Pumpeneinheit und einem diese antreibenden Elektromotor, der einen Stator und einen Rotor mit einer Rotorwelle umfasst, die in zwei Gleitlagern gelagert ist. Zumindest eines dieser Gleitlager ist in dem Pumpenaggregat mittels einer Kreiskeilverbindung unmittelbar oder mittelbar befestigt, umfassend wenigstens einen Kreiskeil und wenigstens einen komplementären Kreiskeil. Das Pumpenaggregat ist als Nassläuferpumpe ausgeführt, in welcher der Stator vom Rotor durch ein Spaltrohr oder ein Spalttopf flüssigkeitsdicht getrennt ist. Ein Spalttopf ist ein Spaltrohr, das an einem axialen Ende mit einem Boden geschlossen ist. Das innere des Spaltrohrs bildet einen Rotorraum, in dem sich der Rotor dreht. Der Rotor umfasst die Rotorwelle und ein Rotorpaket.

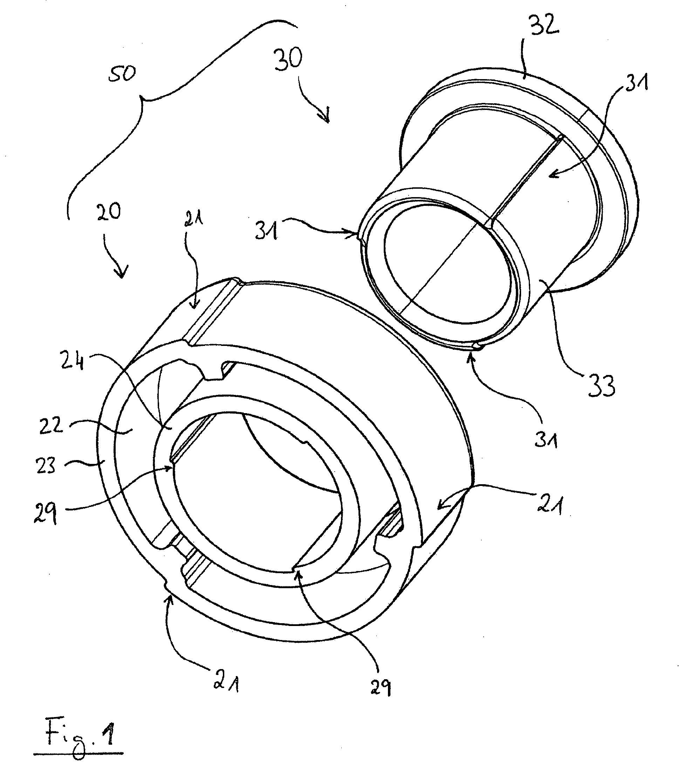

Figur 1 zeigt ein hülsenförmiges Gleitlager 30, das aus einem kreiszylindrischen Rohrabschnitt 33 besteht, der an einem axialen Ende einen sich radial nach außen erstreckenden Kragen 32 aufweist. Die nicht dargestellte Rotorwelle wird koaxial durch den Rohrabschnitt 33 hindurchgeführt und von diesem gelagert. Zwischen der Innenumfangsfläche des Rohrabschnitts 33 und der Mantelfläche der Rotorwelle besteht dann ein mit einer Flüssigkeit gefüllter Lagerspalt, der eine gleitende Drehbewegung der Rotorwelle in dem Gleitlager 30 ermöglicht. Das Gleitlager ist aus Kunststoff, Kohlenstoff, Keramik oder einem Verbundwerkstoff hergestellt.

Auf der äußeren Umfangsfläche der Rohrabschnitts 33 befinden sich drei Kreiskeile 31. Das dem Kragen 32 gegenüberliegende axiale Ende des Rohrabschnitts 33 ist zu seiner Achse hin abgeschrägt, so dass eine Zentrierung der Rotorwelle beim axialen Zusammenfügen erfolgt.

Des Weiteren zeigt Figur 1 einen Lagerträger 20, in den das Gleitlager 30 eingesetzt werden kann bzw. im montierten Zustand eingesetzt ist. Der Lagerträger 20 besteht aus einem rohrförmigen inneren Teil, der eine Innenwand 24 bildet, einem rohrförmigen äußeren Teil, der eine Außenwand 23 bildet und einer ringförmigen Wand 28, die die Innenwand 24 und die Außenwand 23 an einem hinteren axialen Ende des Lagerträgers 20 miteinander verbindet. Der Lagerträger 20 ist aus Kunststoff spritzgegossen.

Zwischen der Innenwand 24 und der Außenwand 23 ist ein freier Ringraum 22 gebildet. An der zur Achse des Lagerträgers gerichteten Innenseite der Außenwand 23 sind drei Vorsprünge 25 symmetrisch verteilt angeformt, die sich achsparallel sowie radial nach innen erstrecken. Der Ringraum 22 dient der Aufnahme eines Werkzeugs, das zu den Vorsprüngen 25 korrespondierende Nuten aufweist und für die Übertragung eines Drehmoments auf den Lagerträger vorgesehen ist.

Die innere Umfangsfläche der Innenwand 24 weist drei Kreiskeile 29 auf, die komplementäre Kreiskeile zu den Kreiskeilen 31 am Außenumfang des Gleitlagers 30 bilden. Diese Kreiskeile 29, 31 bilden somit eine erste Kreiskeilverbindung. Des Weiteren weist der Außenumfang des Lagerträgers 20, genauer gesagt der Außenumfang der Außenwand 23, drei Kreiskeile 21 einer weiteren Kreiskeilverbindung auf.

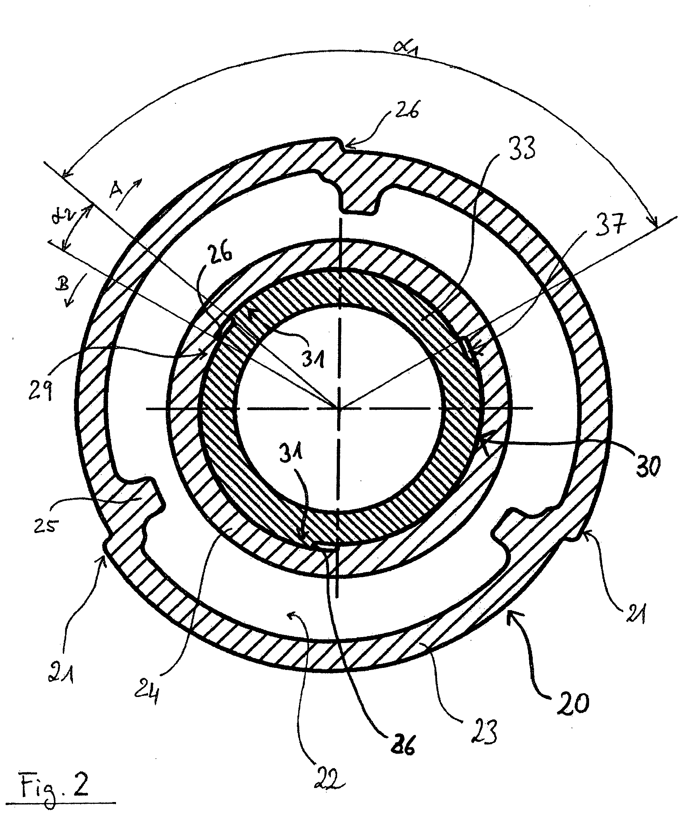

Zur Montage werden das Gleitlager 30 und der Lagerträger 20 axial derart zusammengefügt, dass sie koaxial zunächst mit Spiel in einander einliegen. Anschließend werden das Gleitlager 30 und der Lagerträger 20 gegeneinander verdreht, so dass das Spiel verschwindet und das Gleitlager 30 flächig gegen den Lagerträger 20 gepresst wird. Dies wird anhand Figur 2 verdeutlicht. Gleitlager 30 und Lagerträger 20 bilden gemeinsam eine Lagereinheit 50.

Figur 2 zeigt einen radialen Querschnitt durch den Lagerträger 20 mit darin montiertem Gleitlager 30. Das Gleitlager 30 bildet dabei ein Innenteil, dessen radialer Querschnitt annähernd kreisförmig ist. Der Außenumfang des Gleitlagers 30 entspricht einem Grundkreis, auf dem sich im Querschnitt betrachtet das Kreiskeilprofil mit den Kreiskeilen 31 radial nach außen erhebt. Der Lagerträger 20 bildet demgegenüber als Verbindungspartner ein Außenteil der Kreiskeilverbindung. Der Innenumfang der Innenwand 24 entspricht ebenfalls einem Grundkreis, von dem sich im Querschnitt betrachtet das komplementäre Kreiskeilprofil mit den komplementären Kreiskeilen 29 radial nach innen erhebt.

Jeder Kreiskeil 31 und komplementäre Kreiskeil 29 besteht aus einem stetig steigenden Profil über dem abgewickelten Grundkreis, das bis zu einer bestimmten Profilhöhe ansteigt und danach in einer gegenüber dem Anstieg steilen Flanke abfällt, die als Keilrücken 26, 36 bezeichnet wird. Bei dem Gleitlager 30 erfolgt der Anstieg des Kreisprofils bzw. der Kreiskeile 31 in eine Umfangsrichtung, die mit dem Buchstaben "B" bezeichnet ist. Das komplementäre Kreiskeilprofil bzw. die komplementären Kreiskeile 29 steigen in die entgegengesetzte Umfangsrichtung an, die mit dem Buchstaben "A" bezeichnet ist.

Das Gleitlager 30 und der Lagerträger 20 werden mit Spiel ineinander gefügt. Dies bedeutet, dass die Keilrücken eines Kreiskeils und komplementären Kreiskeils aneinander liegen oder -im Vergleich zum verspannten Zustand- nur gering beabstandet ist. Durch Verdrehen der beiden Verbindungspartner 20, 30 gegeneinander wird das Spiel beseitigt. Bei feststehendem Gleitlager 30 ist dazu der Lagerträger 20 in die Umfangsrichtung B zu drehen oder das Gleitlager 30 bei feststehendem Lagerträger 20 in die Umfangsrichtung A. Das Gleitlager 30 wird dabei gegen den Lagerträger 20 verspannt, wobei die Keilprofile der Kreiskeile gegeneinander flächig gepresst werden und ein Kontaktbereich über dem Umfang mit einem Winkelabschnitt von 3*α₁ von ca. 330° entsteht. Die Keilrücken 26, 36 eines Kreiskeils 31 und in Umfangsrichtung B benachbarten komplementären Kreiskeils 29 entfernen sich durch das Verdrehen der Verbindungspartner 20, 30 voneinander und geben jeweils eine Öffnung 37 mit einer Breite eines Winkelabschnitts α₂ von ca. 10° frei.

Die Außenwand 23 des Lagerträgers 20 trägt weitere drei Kreiskeile 21 zur Herstellung einer Kreiskeilverbindung mit einem weiteren Verbindungspartner, wie nachfolgend noch erläutert wird. Die Außenwand 23 besitzt abschnittsweise eine konstante radiale Dicke. Demgegenüber nimmt die Wanddicke der Innenwand 24 mit fortschreitender Erhebung eines komplementären Kreiskeils 29 zu. Dies wird also bis zum Keilrücken immer dicker. Die Außenwand 23 wird dagegen nicht dicker. Vielmehr wird der Abstand zwischen Außenwand 23 und Innenwand 34 mit fortschreitender Erhebung der äußeren Kreiskeile 21 größer. Es sei angemerkt, dass auch andere Ausführungsarten möglich sind. Beispielsweise kann auch die Innenwand abschnittsweise eine konstante radiale Dicke aufweisen. Ferner kann beispielsweise auch die Außenwand eine Wanddicke besitzen, die mit fortschreitender Erhebung eines Kreiskeils 21 zunimmt.

Damit der Übergang an der Außenwand 23 einem Kreiskeilende zum Anfang des nächsten Kreiskeils nicht zu dünn ist und damit die Gefahr einer Bruchstelle vorliegt, überlappen sich das Ende eines Kreiskeils und der Anfang des nächsten Kreiskeils geringfügig. Dies bedeutet, dass die Außenwand 23 unmittelbar am Ende eines Kreiskeils 21 radial betrachtet verdickt ist.

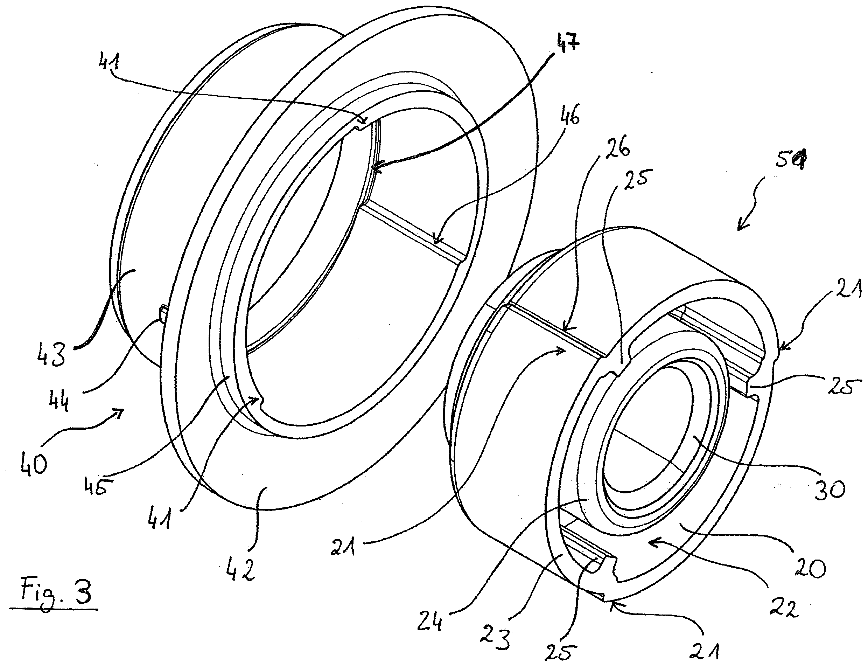

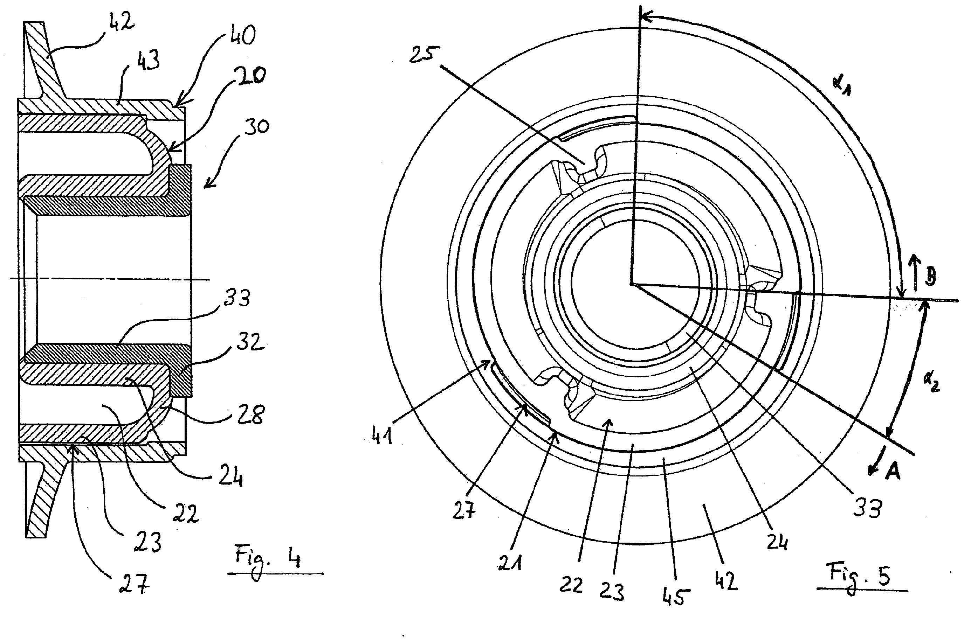

Figuren 3 bis 7 zeigen eine zweite Lagereinheit 51, die eine alternative Ausführungsvariante zur Lagereinheit 50 ist. Gemäß dieser alternativen Ausführungsvariante ist die Lagereinheit 51 wie in den Figuren 1 und 2 zweiteilig aufgebaut, und hinsichtlich ihrer Geometrie sind der Lagerträger 20 und das Gleitlager im Wesentlichen gleich aufgebaut wie in den Figuren 1 und 2. Jedoch sind Gleitlager 30 und Lagerträger 20 nicht über eine Kreiskeilverbindung miteinander verbunden sondern mittels einer herkömmlichen Presspassung. Die Innenseite der Innenwand 24 des Lagerträgers 20 und die Außenseite des rohrförmigen Abschnitts 33 des Gleitlagers 30 sind dementsprechend glatt ausgeführt. Der Außendurchmesser des rohrförmigen Abschnitts 33 ist geringfügig größer als der Innendurchmesser der Innenwand 24, so dass die Presspassung zwischen den Verbindungspartnern 20, 30 beim axialen Ineinanderfügen erzeugt wird, siehe hierzu insbesondere Figur 4.

Gemäß einer nicht dargestellten weiteren Ausführungsvariante der Lagereinheit ist diese nicht zweiteilig aufgebaut wie in den Figuren sondern einteilig. Gleitlager 30 und Lagerträger 20 bilden dann ein einziges Bauteil und sind einstückig. Zwischen Gleitlager 30 und Lagerträger 20 besteht folglich auch kein Kraftschluss, d.h. keine Presspassung wie in den Figuren 3 bis 7 sondern ein Stoffschluss. Der Lagerträger 20 lagert die Rotorwelle somit direkt. Hierzu weist er eine zylindrische Öffnung auf, durch die sich die Rotorwelle drehbar koaxial hindurcherstreckt. Hinsichtlich seiner Geometrie ist der Lagerträger 20 identisch aufgebaut wie der Lagerträger 20 in den Figuren. Die Öffnung ist dementsprechend durch die rohrförmige Innenwand 24 gebildet. Die Innenseite dieser Innenwand 23 ist allerdings mit einer Gleitschicht beschichtet, beispielsweise einer Keramikschicht, einer DLC-Schicht oder einer Kunststoffschicht aus einem verschleißfesten, tribologisch optimierten Kunststoff, vergleiche Figur 4. Gemäß dieser Ausführungsvariante stellt die Gleitschicht dann die Gleitfläche bereit, so dass der Lagerträger selbst als Gleitlager fungiert und auch als Gleitlager betrachtet werden kann.

Soweit nachfolgend die Montage des Lagerträgers 20 mittels einer Kreiskeilverbindung erläutert wird, sei im Hinblick auf die beschriebene, nicht dargestellte Ausführungsvariante auch ein Gleitlager unter diesem Lagerträger zu verstehen.

Bei der zweiten Ausführungsvariante nach den Figuren 3 bis 7 wird der Lagerträger 20 mittels einer Kreiskeilverbindung in einem Haltelement 40 befestigt. Figur 3 zeigt diese Verbindungspartner 20, 40 in einer Explosionsdarstellung. Figur 4 zeigt einen Axialschnitt durch den montierten Zustand von Lagerträger 20 und Halteelement 40. Figur 5 zeigt eine Draufsicht und Figur 6 eine perspektivische Ansicht der monierten Bauteile 20, 40.

Die Außenwand 23 des Lagerträgers 20 weist auf ihrer Außenseite drei Kreiskeile 21 auf. Drei hierzu komplementäre Kreiskeile 41 sind auf der Innenseite eines rohrförmigen Abschnitts 43 des Haltelements 40 ausgebildet. Das Halteelement 40 besteht im Wesentlichen aus diesem rohrförmigen Abschnitt 43 und einem Kragen 42, der sich an einem axialen Ende des rohrförmigen Abschnitts radial nach außen erstreckt. Er dient als flanschförmiges Lagerschild in dem Pumpenaggregat. Wie in Figur 3 erkennbar ist, springt der rohrförmige Abschnitt 43 gegenüber dem Kragen 42 allerdings geringfügig vor, so dass vor dem Kragen 42 ein axial vorstehender Ring 45 gebildet ist.

Das Halteelement 40 kann ein selbständiges Bauteil sein, wie es in den Figuren 3 bis 6 dargestellt ist. Hier ist das Halteelement 40 aus Kunststoff spritzgegossen. Gemäß dieser Variante wird der rohrförmige Abschnitt 43 in einem hier nicht dargestellten Spaltrohr oder Spalttopf derart montiert, dass das Spaltrohr/ Spalttopf den rohrförmigen Abschnitt außenumfänglich umgreift. Die Montage kann mittels einer Presspassung oder erfindungsgemäß ebenfalls über eine Kreiskeilverbindung zwischen Halteelement und Spaltrohr erfolgen. Bezugsziffer 44 deutet in Fig. 3 einen Teil des abgeschnittenen Spaltrohres an.

Bei der Montage des Lagerträgers 20 in dem Halteelement 40 bildet der Lagerträger das Innenteil. Im radialen Querschnitt betrachtet (vgl. Figur 2) ist die Außenwand 23 annähernd kreisförmig. Ihr Außenumfangentspricht einem Grundkreis, auf dem sich im Querschnitt betrachtet das Kreiskeilprofil mit den Kreiskeilen 21 radial nach außen erhebt. Das Halteelement 40 bildet demgegenüber als Verbindungspartner das Außenteil der Kreiskeilverbindung. Der Innenumfang des rohrförmigen Abschnitts entspricht ebenfalls einem Grundkreis, von dem sich im Querschnitt betrachtet das komplementäre Kreiskeilprofil mit den komplementären Kreiskeilen 41 radial nach innen erhebt. Jeder Kreiskeil 21 und komplementäre Kreiskeil 41 besteht auch hier aus einem stetig steigenden Profil über dem abgewickelten Grundkreis, das bis zu einer bestimmten Profilhöhe ansteigt und danach in einer gegenüber dem Anstieg steilen Flanke abfällt, so dass ein entsprechender Keilrücken 26, 46 entsteht. Bei der Außenwand des Lagerträgers erfolgt der Anstieg des Kreisprofils bzw. der Kreiskeile 21 in die Umfangsrichtung "A". Das komplementäre Kreiskeilprofil bzw. die komplementären Kreiskeile 41 steigen in die entgegengesetzte Umfangsrichtung "B" an, siehe Figur 5.

Das Montieren des Lagerträgers 20 im Haltelement 40 erfolgt auch hier durch axiales Fügen mit Spiel und Verdrehen der Verbindungspartner gegeneinander. Bei feststehendem Halteelement ist dazu der Lagerträger 20 in die Umfangsrichtung B zu drehen. Der Lagerträger 20 wird dadurch gegen das Halteelement 40 verspannt, wobei die Keilprofile der Kreiskeile 21, 41 gegeneinander flächig gepresst werden und ein Kontaktbereich über dem Umfang mit einem Winkelabschnitt von 3*α₁ von ca. 279° entsteht. Zwischen den Keilrücken 26, 46 eines Kreiskeils 21 und in Umfangsrichtung A benachbarten komplementären Kreiskeils 41 entfernen sich durch das Verdrehen der Verbindungspartner 20, 40 voneinander und geben jeweils eine Öffnung 27 mit einer Breite eines Winkelabschnitts α₂ von ca. 27° frei.

Wie in den Figuren 3 und 4 erkennbar ist, erstreckt sich das Kreiskeilprofil nicht entlang der gesamten axialen Länge der Innenseite des rohrförmigen Abschnitts 43. Das Kreiskeilprofil besitzt vielmehr eine Tiefe, die der axialen Länge des Lagerträgers 20 entspricht, siehe Figur 4. Innenseitig der rohrförmigen Abschnitts 43 ist ein ringförmiger Vorsprung 47 ausgebildet, der als Anschlag für den Lagerträger 20 in denjenigen Umfangsabschnitten wirkt, in denen die Kreiskeile 41 ihre maximale Profilhöhe noch nicht erreicht haben.

Anstelle der in den Figuren 3 bis 6 gezeigten Lagereinheit 51 kann auch die Lagereinheit 50 gemäß der ersten Ausführungsvariante nach den Figuren 1 und 2 in das Haltelement 40 eingesetzt werden, bzw. eingesetzt sein. In diesem Fall ist dem Gleitlager 30 und dem Lagerträger 20 eine erste Kreiskeilverbindung und zwischen dem Lagerträger 20 und dem Halteelement 40 eine zweite Kreiskeilverbindung. In diesem Fall kommt es auf die Ausrichtung der Kreiskeilprofile zwischen erster und zweiter Kreiskeilverbindung an, da eine Kreiskeilverbindung in die eine Drehrichtung gespannt, in die andere jedoch gelöst wird. Die Kreiskeilverbindungen müssen deshalb so ausgerichtet sein, dass sie in dieselbe Richtung gespannt und gelöst werden.

Hierzu sind bei demjenigen Bauelement, das Verbindungpartner zweier Kreiskeilverbindungen ist, die Kreiskeile der zweiten Kreiskeilverbindung in dieselbe Umfangsrichtung ansteigend auszuformen wie die Kreiskeile der ersten Kreiskeilverbindung ansteigen. Dies kann man sich am besten anhand von Figur 2 klarmachen. Hier ist der Lagerträger 20 dasjenige Bauteil, das Verbindungpartner zweier Kreiskeilverbindungen ist. Die zu den Gleitlagerkreiskeilen 31 komplementären Kreiskeile 29 erheben sich in Umfangsrichtung A. In diese Richtung erheben sich auch die Kreiskeile 21 auf der Außenseite der Außenwand 23. Die sich am Lagerträger 20 außenumfänglich und innenumfänglich angeordneten Kreiskeile 21, 29 erheben sich folglich in dieselbe Umfangsrichtung A. Sofern das Halteelement 40 mittels einer Kreiskeilverbindung in einem Spaltrohr montiert wird, gilt hier Entsprechendes.

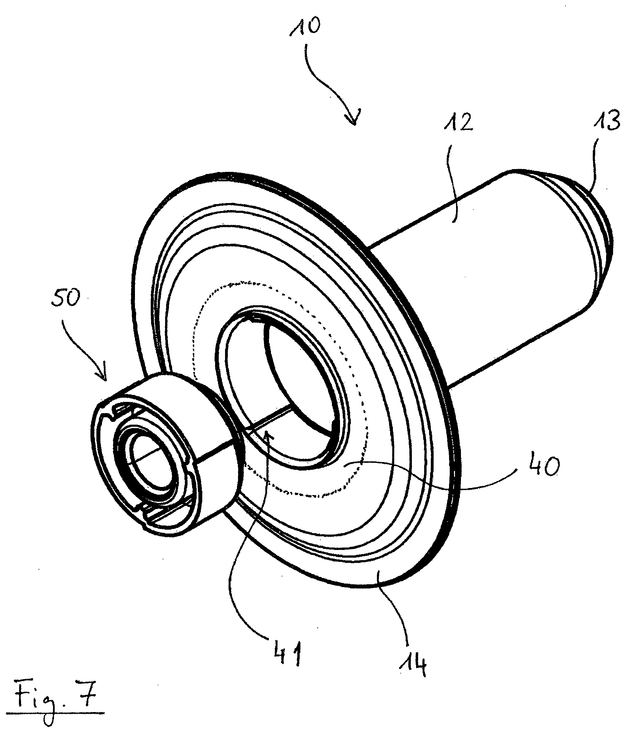

Figur 7 zeigt eine dritte Ausführungsvariante der Erfindung. Wie bereits angesprochen, kann das Halteelement ein eigenständiges Bauteil oder Teil eines anderen Bauteils sein, das in dem Pumpenaggregat montiert wird. In der Ausführungsvariante nach Figur 7 ist das Halteelement durch den Endabschnitt eines Spaltrohrs 10 gebildet, das den Rotorraum vom Stator trennt. Das Spaltrohr ist hier als Spalttopf ausgeführt und besteht aus einem rohrförmigen Abschnitt 12, einem Boden 13, der ein axiales Ende des rohrförmigen Abschnitts 12 verschließt, und dem Halteelement 40, das am anderen Ende des rohrförmigen Abschnitts ausgebildet ist, d.h. einstückig in dieses übergeht. Der Kragen 42 des Halteelements 40 in Figuren 3 bis 6, ist in Figur 7 verlängert und bildet nunmehr einen Schild, der zwischen dem Stator und der Pumpenkammer angeordnet ist. Es deckt den Stator stirnseitig ab. Eine gepunktete Linie in Figur 7 zeigt an, bis wohin sich der Flansch 42 des Haltelements 40 erstreckt.

Gemäß der dritten Ausführungsvariante ist der rohrförmige Abschnitt 43 des Halteelements 40 Teil des Spaltrohrs 10. Dies bedeutet, dass die Kreiskeilverbindung in dieser Variante zwischen dem Lagerträger 20 und dem Spaltrohr 10 besteht. Dieser Lagerträger 20 kann mit dem Gleitlager 30 über eine Kreiskeilverbindung, eine herkömmliche Presspassung oder einen Stoffschluss verbunden sein.

Dadurch, dass das Pumpenaggregat, in dem die erfindungsgemäße Kreiskeilverbindung Anwendung findet, eine Nassläuferpumpe ist, stellen die Öffnungen 27, 37 zwischen den Keilrücken Durchströmöffnungen dar, durch die die Flüssigkeit, insbesondere die von der Pumpe geförderte Flüssigkeit in den Rotorraum strömen kann. Zu diesem Zweck sollten die Öffnungen offen bzw. durchströmbar bleiben. In den Öffnungen 27, 37 sind Filterelemente eingesetzt, um grobe Schwebstoffe wie Kalk- und Rostpartikel zu filtern und um zu verhindern, dass diese in den Rotorraum gelangen.

Um ein Lösen einer der Kreiskeilverbindungen zu verhindern, ist ferner ein Sperrmittel in einer der Öffnungen 27, 37 eingesetzt. Es genügt, ein solches in einer einzigen Öffnung 27, 37 vorzusehen. Dieses blockiert eine Relativbewegung der Verbindungspartner zueinander. Damit die Durchströmbarkeit weiterhin gegeben ist, ist das Sperrmittel als Hohlprofil oder als Filter ausgebildet, beispielsweise aus gepresstem Drahtgeflecht oder gesintertem Metall.

### Bezugszeichenliste

- 10: Spaltrohr
- 11: Kreiskeil
- 12: rohrförmiger Abschnitt
- 13: Boden
- 14: Schild
- 20: Lagerträger
- 21: äußerer Kreiskeil
- 22: Ringraum
- 23: Außenwand
- 24: Innenwand
- 25: Vorsprung
- 26: Keilrücken
- 27: Öffnung
- 28: Stützstruktur, ringförmiger Boden
- 29: innerer Kreiskeil
- 30: Gleitlager
- 31: Kreiskeil
- 32: Kragen
- 33: kreiszylindrischen Rohrabschnitt
- 34: Keilrücken
- 37: Öffnung
- 40: Halteelement
- 41: innerer Kreiskeil
- 42: Kragen
- 43: rohrförmiger Abschnitt
- 44: Vorsprung
- 45: axial vorstehender Ring
- 46: Keilrücken
- 47: Anschlag
- 50: Lagereinheit aus 20 und 30 mit Kreiskeilverbindung
- 51: Lagereinheit aus 20 und 30 mit Presspassung

## Patentansprüche

1. Pumpenaggregat mit einer Pumpeneinheit und einem diese antreibenden Elektromotor umfassend einen Stator und einen Rotor mit einer Rotorwelle, die in wenigstens einem Gleitlager (30) gelagert ist, **dadurch gekennzeichnet, dass** die Befestigung des Gleitlagers (30) in dem Pumpenaggregat mittels wenigstens einer Kreiskeilverbindung (21, 41; 29, 31) umfassend wenigstens einen Kreiskeil (21, 31) und wenigstens einen komplementären Kreiskeil (29, 41) erfolgt.

2. Pumpenaggregat nach Anspruch 1, **dadurch gekennzeichnet, dass** die Kreiskeilverbindung (29, 31) zwischen dem Gleitlager (30) und einem das Gleitlager (30) aufnehmenden Lagerträger (20) gebildet ist.

3. Pumpenaggregat nach Anspruch 1, **dadurch gekennzeichnet, dass** die Kreiskeilverbindung zwischen dem Gleitlager (30) und einem am Elektromotor oder an der Pumpeneinheit befestigten Halteelement (40) gebildet ist.

4. Pumpenaggregat nach Anspruch 1 oder 2, **dadurch gekennzeichnet, dass** die Kreiskeilverbindung oder eine weitere Kreiskeilverbindung (21, 41) zwischen einem das Gleitlager (30) aufnehmenden Lagerträger (20) und einem am Elektromotor oder an der Pumpeneinheit befestigten Halteelement (40) gebildet ist.

5. Pumpenaggregat nach Anspruch 3 oder 4, **dadurch gekennzeichnet, dass** der Rotor in einem Rotorraum dreht, der vom Stator durch ein Spaltrohr (10) getrennt ist, und das Halteelement (40) einen Endabschnitt des Spaltrohres (10) bildet.

6. Pumpenaggregat nach Anspruch 3 oder 4, **dadurch gekennzeichnet, dass** der Rotor in einem Rotorraum dreht, der vom Stator durch ein Spaltrohr (10) getrennt ist, und das Halteelement (40) im Spaltrohr (10) über die Kreiskeilverbindung oder eine weitere Kreiskeilverbindung befestigt ist.

7. Pumpenaggregat nach einem der Ansprüche 2 bis 7, **dadurch gekennzeichnet, dass** der wenigstens eine Kreiskeil (21, 31) sich in eine erste Umfangsrichtung erhebend auf der Außenumfangsfläche des Gleitlagers (30), des Lagerträgers (20) oder des Halteelements (40) ausgebildet ist, und dass der radial gegenüberliegende wenigstens eine komplementäre Kreiskeil (29, 41) sich in die entsprechend entgegengesetzte Umfangsrichtung erhebend auf der Innenumfangsfläche des Lagerträgers (20), des Halteelements (40) oder des Spaltrohres (10) ausgebildet ist.

8. Pumpenaggregat nach einem der vorherigen Ansprüche, **dadurch gekennzeichnet, dass** die Kreiskeilverbindung (21, 41; 29, 31) und/ oder die weitere Kreiskeilverbindung durch drei Kreiskeile (21, 31) und entsprechend drei komplementäre Kreiskeile (29, 41) gebildet ist.

9. Pumpenaggregat nach einem der vorherigen Ansprüche, **dadurch gekennzeichnet, dass** der Rotor nasslaufend ist und zwischen wenigstens einem Kreiskeil (21, 31) und einem in Umfangsrichtung benachbarten komplementären Kreiskeil (29, 41) im verspannten Zustand der Kreiskeilverbindung (21, 41; 29, 31) in Umfangsrichtung eine für die den Rotor umgebende Flüssigkeit unverschlossene Öffnung (27, 37) gebildet ist.

10. Kreiselpumpenaggregat nach Anspruch 8 oder 9, **dadurch gekennzeichnet, dass** zwischen einem jeden Kreiskeil (21, 31) und in Umfangsrichtung benachbarten komplementären Kreiskeil (29, 41) im verspannten Zustand der Kreiskeilverbindung (21, 41; 29, 31) eine Öffnung (27, 37) gebildet ist, von denen mindestens eine im Betrieb des Pumpenaggregats zur Durchströmung unverschlossen ist.

11. Kreiselpumpenaggregat nach Anspruch 9 oder 10, **dadurch gekennzeichnet, dass** in der Öffnung (27, 37) oder wenigstens einer der Öffnungen (27, 37) ein Sperrmittel einliegt.

12. Kreiselpumpenaggregat nach einem der Ansprüche 9 bis 11, **dadurch gekennzeichnet, dass** in der Öffnung (27, 37) oder wenigstens einer der Öffnungen (27, 37) ein Filterelement einliegt.

13. Kreiselpumpenaggregat nach Anspruch 11 und 12, **dadurch gekennzeichnet, dass** das Filterelement das Sperrmittel ist.

14. Pumpenaggregat nach einem der vorherigen Ansprüche 2 bis 13, **dadurch gekennzeichnet, dass** das Gleitlager (30) oder der Lagerträger (20) eine die Kreiskeilform tragende Außenwand (23) und eine die Rotorwelle lagernde Innenwand (24) aufweist, wobei die Außenwand (23) und die Innenwand (24) beabstandet zueinander liegen und über eine Stützstruktur (28) miteinander verbunden sind.

15. Pumpenaggregat nach Anspruch 14, **dadurch gekennzeichnet, dass** die Stützstruktur (28) durch eine ringförmige Wand oder durch wenigstens drei Verbindungsstege gebildet ist.

16. Pumpenaggregat nach einem der Ansprüche 14 oder 15, **dadurch gekennzeichnet, dass** die Stützstruktur (28) an einem axialen Ende der Außenwand (23) und der Innenwand (24) oder im Bereich zwischen der axialen Mitte und dem besagten Ende angeordnet ist.

17. Pumpenaggregat nach einem der Ansprüche 14 bis 16, **dadurch gekennzeichnet, dass** die Außenwand (23) und/ oder die Innenwand (24) wenigstens einen radialen Vorsprung (25) zur formschlüssigen Aufnahme eines drehmomenterzeugenden Werkzeugs aufweist.

18. Pumpenaggregat nach einem der Ansprüche 5 oder 7 bis 17, **dadurch gekennzeichnet, dass** das Spaltrohr (10) ein Spalttopf mit einem ein axiales Ende verschließenden Boden (13) ist und der Endabschnitt durch dieses geschlossene Ende gebildet ist, wobei in dem Endabschnitt eine kreiskeilförmige Aufnahme vorgesehen ist, in der das Gleitlager (50) oder der Lagerträger (20) einliegt.

19. Pumpenaggregat nach einem der Ansprüche 2 bis 18, **dadurch gekennzeichnet, dass** sich die am Lagerträger (20) oder am Halteelement (40) außenumfänglich und innenumfänglich angeordneten Kreiskeile (21, 29) in dieselbe Umfangsrichtung erheben.

## Claims

1. Pump assembly comprising a pump unit and an electric motor which drives said assembly, comprising a stator and a rotor with a rotor shaft supported in at least one slide bearing (30), **characterised by** the slide bearing (30) being mounted in the pump assembly by means of at least one circular wedges connection (21, 41; 29, 31) comprising at least one circular wedge (21, 31) and at least one complementary circular wedge (29, 41).

2. Pump assembly according to claim 1, **characterised by** the circular wedges connection (29, 31) being realised between the slide bearing (30) and a bearing support (20) holding the slide bearing (30).

3. Pump assembly according to claim 1, **characterised by** the circular wedges connection being realised between the slide bearing (30) and a support element (40) mounted on the electric motor or on the pump unit.

4. Pump assembly according to claim 1 or 2, **characterised by** the circular wedges connection or an additional circular wedges connection (21, 41) being realised between a bearing support (20) holding the slide bearing (30) and a support element mounted on the electric motor or on the pump unit (40).

5. Pump assembly according to claim 3 or 4, **characterised by** the rotation of the rotor in a rotor chamber that is separated from the stator by a split tube (10), and by the support element (40) forming an end section of the split tube (10).

6. Pump assembly according to claim 3 or 4, **characterised by** the rotation of the rotor in a rotor chamber that is separated from the stator by a split tube (10), and by the support element (40) being mounted in the split tube (10) by the circular wedges connection or an additional circular wedges connection.

7. Pump assembly according to one of the claims 2 through 7, **characterised by** at least one circular wedge (21, 31) being realised in a first circumferential direction raised on the outer peripheral surface of the slide bearing (30), the bearing support (20) or the support element (40), and the radially opposite at least one complementary circular wedge (29, 41) being realised in the corresponding opposite circumferential direction raised on the inner peripheral surface of the bearing support (20), the support element (40) or the split tube (10).

8. Pump assembly according to one of the preceding claims, **characterised by** the circular wedges connection (21, 41; 29, 31) and/or the additional circular wedges connections being formed by three circular wedges (21, 31) and corresponding complementary circular wedges (29, 41).

9. Pump assembly according to one of the preceding claims, **characterised by** the rotor being wet running and an opening (27, 37) that is unsealed for the liquid surrounding the rotor being formed in the circumferential direction between at least one circular wedge (21, 31) and a complementary circular wedge adjacent in the circumferential direction (29, 41) in the clamped state of the circular wedges connection (21, 41; 29, 31).

10. Rotary pump assembly according to claim 8 or 9, **characterised by** an opening (27, 37) being formed between each circular wedge (21, 31) and the complementary circular wedge adjacent in the circumferential direction (29, 41) in the clamped state of the circular wedges connection (21, 41; 29, 31), of which at least one is unsealed during operation of the pump assembly to allow the flow of liquid.

11. Rotary pump assembly according to claim 9 or 10, **characterised by** a sealing device lying in the opening (27, 37) or at least one of the openings (27, 37).

12. Rotary pump assembly according to one of the claims 9 through 11, **characterised by** a filter element lying in the opening (27, 37) or at least one of the openings (27, 37).

13. Rotary pump assembly according to claims 11 and 12, **characterised by** the filter element being the sealing device.

14. Pump assembly according to one of the preceding claims 2 through 13, **characterised by** the slide bearing (30) or the bearing support (20) having an outer wall (23) supporting the circular wedge and an inner wall (24) supporting the rotor shaft, in which the outer wall (23) and the inner wall (24) are at a distance from each other and are connected to each other by a supporting structure (28).

15. Pump assembly according to claim 14, **characterised by** the supporting structure (28) being formed by an annular wall or by at least three webs.

16. Pump assembly according to claim 14 or 15, **characterised by** the supporting structure (28) being arranged at one axial end of the outer wall (23) and the inner wall (24) or in the area between the axial centre and said end.

17. Pump assembly according to one of the claims 14 through 16, **characterised by** the outer wall (23) and/or the inner wall (24) having at least one radial projection (25) for the form-fitting mounting of a torque-producing tool.

18. Pump assembly according to one of the claims 5 or 7 through 17, **characterised by** the split tube (10) being a separating can with a bottom that closes an axial end (13) and the end section being formed by this closed end, in which a circular wedge shaped holder is provided in the end section into which the slide bearing (50) or the bearing support (20) is inserted.

19. Pump assembly according to one of the claims 2 through 18, **characterised by** the circular wedges (21, 29) arranged on the outer circumference and inner circumference of the bearing support (20) or the support element (40) being raised in the same circumferential direction.

## Revendications

1. Unité de pompage composée d'un module de pompe entraîné par un moteur électrique, un stator et un rotor avec un arbre de rotor supporté par au moins un palier lisse (30), **caractérisée en ce que** le palier lisse (30) est fixé dans l'unité de pompage au moyen d'au moins une connexion par cale circulaire (21, 41 ; 29, 31) comprenant au moins une cale circulaire (21, 31) et au moins une cale circulaire complémentaire (29, 41).

2. Unité de pompage selon la revendication 1, **caractérisée en ce que** la connexion par cale circulaire (29, 31) est réalisée entre le palier lisse (30) et un porte-palier (20) supportant le palier lisse (30).

3. Unité de pompage selon la revendication 1, **caractérisée en ce que** la connexion par cale circulaire est réalisée entre le palier lisse (30) et un élément de retenue (40) fixé sur le moteur électrique ou le groupe de pompe.

4. Unité de pompage selon la revendication 1 ou 2, **caractérisée en ce que** la connexion par cale circulaire ou une autre connexion par cale circulaire (21, 41) est réalisée entre un porte-palier (20) supportant le palier lisse (30) et un élément de retenue (40) fixé sur le moteur électrique ou le groupe de pompe.

5. Unité de pompage selon la revendication 3 ou 4, **caractérisée en ce que** le rotor tourne dans un espace de rotor séparé du stator par une gaine (10) et que l'élément de retenue (40) forme une section finale de la gaine (10).

6. Unité de pompage selon la revendication 3 ou 4, **caractérisée en ce que** le rotor tourne dans un espace de rotor séparé du stator par une gaine (10) et que l'élément de retenue (40) dans la gaine (10) est fixé par une connexion par cale circulaire ou une autre connexion par cale circulaire.

7. Unité de pompage selon l'une des revendications 2 à 7, **caractérisée en ce qu'**au moins une cale circulaire (21, 31) est formée, s'élevant dans le sens périphérique, sur la surface périphérique extérieure du palier lisse (30), du porte-palier (20) ou de l'élément de retenue (40) et qu'au moins une cale circulaire complémentaire (29, 41) disposée radialement sur le côté opposé est formée, s'élevant dans le sens opposé de la périphérie sur la surface périphérique intérieure du porte-palier (20), de l'élément de retenue (40) ou de la gaine (10).

8. Unité de pompage selon l'une des revendications précédentes, **caractérisée en ce que** la connexion par cale circulaire (21, 41 ; 29, 31) et/ou une autre connexion par cale circulaire sont formées par trois cales circulaires (21, 31) et les trois cales circulaires complémentaires (29, 41) correspondantes.

9. Unité de pompage selon l'une des revendications précédentes, **caractérisée en ce que** le rotor est à marche humide et une ouverture (27, 37) non fermée pour le liquide dans lequel est plongé le rotor est formée dans le sens périphérique entre au moins une cale circulaire (21, 31) et une cale circulaire complémentaire adjacente dans le sens périphérique lorsque la connexion par cale circulaire (21, 41 ; 29, 31) est serrée.

10. Groupe motopompe centrifuge selon la revendication 8 ou 9, **caractérisé en ce que,** lorsque la connexion par cale circulaire (21, 41 ; 29, 31) est tendue, une ouverture (27, 37) est formée entre chaque cale circulaire (21, 31) et sa cale circulaire complémentaires adjacente dans le sens périphérique (29, 41), une de ces ouvertures au moins étant fermée pour l'écoulement pendant le fonctionnement de l'unité de pompage.

11. Groupe motopompe centrifuge selon la revendication 9 ou 10, **caractérisé en ce qu'**un dispositif d'arrêt est placé dans l'ouverture (27, 37) ou au moins l'une des ouvertures (27, 37).

12. Groupe motopompe centrifuge selon les revendications 9 à 11, **caractérisé en ce qu'**un élément de filtre est placé dans l'ouverture (27, 37) ou au moins l'une des ouvertures (27, 37).

13. Groupe motopompe centrifuge selon les revendications 11 et 12, **caractérisé en ce que** l'élément de filtre est le dispositif d'arrêt.

14. Unité de pompage selon l'une des revendications précédentes 2 à 13, **caractérisée en ce que** le palier lisse (30) ou le porte-palier (20) présente une paroi extérieure (23) supportant la forme de cale circulaire et une paroi intérieure (24) supportant l'arbre du rotor, sachant que la paroi extérieure (23) et la paroi intérieure (24) sont éloignées l'une de l'autre mais reliées l'une à l'autre par une structure de support (28).

15. Unité de pompage selon la revendication 14, **caractérisée en ce que** la structure de support (28) est formée d'une paroi annulaire ou d'au moins trois montants de jonction.

16. Unité de pompage selon l'une des revendications 14 ou 15, **caractérisée en ce que** la structure de support (28) est disposée sur l'extrémité axiale de la paroi extérieure (23) et de la paroi intérieure (24) ou dans la zone entre le milieu axial et l'extrémité citée.

17. Unité de pompage selon l'une des revendications 14 à 16, **caractérisée en ce que** la paroi extérieure (23) et/ou la paroi intérieure (24) présente au moins une saillie radiale (25) vers un logement avec ajustement de forme d'un outil générateur de couple.

18. Unité de pompage selon l'une des revendications 5 ou 7 à 17, **caractérisée en ce que** la gaine (10) est un pot d'entrefer avec un fond refermant une extrémité axiale (13) et que la section finale et formée par cette extrémité fermée, sachant que la section finale présente un logement en forme de cale circulaire dans lequel est placé le palier lisse (50) ou le porte-palier (20).

19. Unité de pompage selon l'une des revendications 2 à 18, **caractérisée en ce que** les cales circulaires (21, 29) disposées à l'intérieur et à l'extérieur de la périphérie sur le porte-palier (20) ou l'élément de retenue (40) ont le même sens périphérique.
